# EUROPEAN PATENT SPECIFICATION

(11) **EP 0 315 472 B1**
(45) Date of publication and mention of the grant of the patent: **16.02.1994**
(21) Application number: 88310401.0
(22) Date of filing: 04.11.1988
(51) Int. Cl.: C09K 19/00, C09K 19/38

(54) **Multiphase systems**
Multiphasensysteme
Systèmes multiphases

(30) Priority: 06.11.1987 HU 497487; 06.11.1987 HU 497587
(43) Date of publication of application: 10.05.1989
(73) Proprietor: CHINOIN Gyogyszer és Vegyészeti Termékek Gyára RT., H-1045 Budapest IV (HU)
(72) Inventor: Pinter, Janos, H-1025 Budapest (HU); Szego, Andras, H-1088 Budapest (HU); Pal, Anna, H-1082 Budapest (HU); Marmarosi, Katalin, H-2051 Biatorbagy (HU); Pap, Laszlo, H-1112 Budapest (HU)
(74) Representative: Skailes, Humphrey John

(56) References cited:
- EP-A- 0 271 375
- GB-A- 1 439 244
- JP-A-63 178 215
- CHEMICAL ABSTRACTS, vol. 90, no. 2, 1978, abstract no. 12429t, Columbus, Ohio, US; S. ENGSTROM et al.: "Ion condensation on planar surfaces. A solution of the Poisson-Boltzmann equation for two parallel charged plates"
- CHEMICAL ABSTRACTS, vol. 90, no. 12, 1978, abstract no. 92928t, Columbus, Ohio, US; B. TAMAMUSHI et al.: "Surface and interfacial tensions of systems involving lyotropic liquid crystals"
- CHEMICAL ABSTRACTS, vol. 96, no. 22, 1981, abstract no. 187710d, Columbus, Ohio, US; J. PINTER et al.: "Lyotropic liquid crystals"

## Description

The invention relates to lyotropic liquid crystalline compositions wherein the formation of liquid crystalline structure is the result of an interaction (grafting) with a solid surface.

It is generally characteristic of liquid crystalline systems that they contain a large amount of amphipatic molecules (containing both hydrophobic and hydrophilic groups) beside the solvent. For example Moucharafieh and Frieberg (Mol. Cryst. Liq. Cryst. 49 Letters 231-238, 1979) describe such systems wherein the amount of amphipatic material is 55% by weight if water is used as solvent and more than 45% by weight if ethylene glycol is the solvent (the balance is solvent).

Similar results were obtained in the course of our experiments. A large amount of surfactant seems to be necessary independently of the ionogenic character of the amphipatic material. According to Tiddy et al. (J. Chem. Soc. Faraday Trans. I. 77) sodium dodecyl sulfate (as a typical anionic surfactant material) forms a liquid crystalline system with water at a concentration of >67% by weight.

In addition to the large amount of the surfactant, further problems arise in connection with liquid crystalline systems. Heusch (Proc. VII. Intern. Congr. on Surfactants, Moscow, 1978. pp. 911-940) examined anionic, cationic and non-ionic surfactants and found that the viscosity (measured by Höppler viscosimeter) of systems having a lyotropic liquid crystalline structure exceeded the upper measuring limit of the viscosimeter ( = 50,000 mPa.s). Systems having such high viscosity cannot be used in practice or are applicable only in special fields, e.g. as cleaning gels.

Much effort has been made to develop liquid crystalline systems having a surfactant content below the lower limit of the concentration range of 45 - 70% by weight. The common feature of these compositions is that they contain another amphipatic material, called a co-surfactant, capillaractive material or amphiphile, in addition to the surfactant. Danielson (Proc. VII. Intern. Congr. on Surfactants, Moscow, 1978. pp. 1010-1037) investigated systems containing sodium octanoate as surfactant in an amount of 6 - 27% by weight, 5 - 33% by weight of water and decanol as co-surfactant in an amount of 70 - 95% by weight. In that decanol is a transition between the surfactant and co-surfactant materials, the result obtained is not surprising. James and Heathcock arrive at the same conclusion (J. Chem. Soc. Faraday Trans. I. 77, 2857-2865 1981).

The formation of a liquid crystalline structure is very advantageous as it assures the thermodynamic stability of the composition and the sedimentation stability of the material dispersed therein. The advantageous properties of the known liquid crystalline systems, however, cannot be utilized partly due to economic reasons (attributed to the high concentration of the surfactant and/or co-surfactant materials) and partly due to the extremely high viscosity (several hundred thousand mPa) of these compositions.

The aim of our invention is to obtain liquid crystalline systems which can assure the liquid crystalline structure by the use of a relatively low amount of surfactant and/or co-surfactant and the viscosity of which does not exceed 10 Pa. A further aim of our invention is to obtain liquid crystalline systems the crystalline structure of which is locally maintained for a long time on dilution.

It has been found that a liquid crystalline structure can be formed using a significantly lower amount of surfactant and/or co-surfactant compared to the known systems containing surfactants (and optionally co-surfactants and/or other solvents) if the mixture (or solution or dispersion) of the aforementioned materials is grafted with a solid material having a surface free energy of 18 to 240 mN/m and a grain size of <100 µm. Surprisingly it has been found that the viscosity of liquid crystalline system obtained by grafting is considerably lower than that of the conventional lyotropic systems. It has also been found that the lyotropic liquid crystalline layer is maintained for a long period after the dilution of the system and its decomposition is slow if the system contains a polymer in an amount of 0.01 - 40% by mass, which polymer is in a relative stretched state and is partly or totally penetrable by the medium: a > 0.6.

The amount of the solid grafting material is between 0.5 and 50% by weight.

The penetrability of said polymer (i.e. the extent of its tangly structure) can be characterized by the a exponent of Kuhn, Mark, Houwink's relation existing between the intrinsic viscosity and the molar mass (see Rohrsetzer, S: Colloidal Chemistry, Textbook Publisher, 1986 and Shaw, D. J.: Introduction into the Colloidal and Surface Chemistry, Technical Publisher, 1986).

The liquid crystalline composition according to the invention is characterized in that it contains 0.5 to 50% by weight of a solid material or a mixture thereof having a surface free energy of 18 to 240 mN/m and a grain size of < 100 µm, 5 to 55% by weight of a surfactant or a mixture thereof having at least 8 carbon atoms, optionally 0.01 to 40% by weight of a polymer the value of a of which - characteristic of the tangly structure and of penetrability by the medium - is at least 0.6, 0 to 67% by weight of water or aqueous solution of non-surfactant materials, 0 to 40% by weight of a water immiscible, miscible or partly miscible solvent or a mixture thereof or a water immiscible or partly miscible organic solvent solution of non-surfactant materials, and 0 to 60% by weight of a co-surfactant or a mixture thereof and optionally other additives, and in that the total amount of water, water immiscible, miscible or partly miscible solvents and co-surfactants used as auxiliary materials is 15 to 94.5% by weight.

The composition according to the invention may be prepared by grafting the solid material with a solution or suspension containing the other ingredients of the composition.

The solid material having a surface free energy of 18 to 240 mN/m may be prepared in the system in situ.

Alternatively the composition may be prepared by dissolving the auxiliary materials and/or co-surfactants and grafting with the solid materials simultaneously.

According to the invention the following surfactants can be used:
Anionic materials: carboxylic acid salts, e.g. fatty acid soaps; sulfates, e.g. alkyl sulfates, preferably sodium dodecyl sulfate; sulfonic acid salts, e.g. alkyl benzene-sulfonates; phosphates, e.g. alkyl phosphates and their salts; esters of ethoxylated fatty alcohols prepared with inorganic acids, preferably with sulfuric acid, phosphoric acid, and their salts, etc.
Cationic materials: ammonium salts, e.g. cetyl-trimethyl-ammonium halides; quaternary nitrogen compounds, e.g. N-alkyl pyridinium salts; alkyl amines or the salts of alkyl amides - ethylene oxide adducts, e.g. ethoxylated coconut fatty acid amide.
Non-ionic materials: fatty acid esters of polyhydric alcohols, ethoxylated-dianhydrosorbitol-stearates o-phosphoric acid-trialkyl esters; ethyleneoxide adducts, e.g. fatty acid - polyethylene glycol esters, fatty alcohol - ethylene oxide adducts, adducts of alkyl phenols and ethylene oxide, preferably alkyl phenol-polyglycol ether; adducts of alkyl amines or alkyl amides with ethylene oxide; adducts of polypropylene glycols with ethylene oxide; o-phosphoric acid triesters of alkyl polyethylene glycol ethers, etc. Amphoteric materials: preferably internal salts of betaines or phosphoric acid derivatives formed with choline.

In the compositions according to the invention the following solvents may be used: water, aliphatic and/or aromatic solvents, e.g. mineral oils, low molecular weight ketones, mono- or polyhydric alcohols and ethers; vegetable and animal oils, saturated or unsaturated carboxylic acids having 1 to 6 carbon atoms or unsaturated carboxylic acids having more than 6 carbon atoms.

As co-surfactants alcohols, ketones and esters containing one or more polar groups, or fatty alcohols, e.g. iso-octanol or dodecanol, may be used.

As polymer polyelectrolytes, neutral polymers, natural macromolecules and derivatives thereof, polypeptides having an a value higher than 0.6, may be used.

As solid material having a surface free energy of 18 to 240 mN/m natural material ( e.g. quartz or anatase), synthetic materials ( e.g. plastic materials) or basic materials of paints, etc. may be used. If the solid materials used possess biological activity, the composition according to the invention may preferably be used in the field of human and veterinary therapeutics and plant protection.

The results given in the following Examples have been obtained by using the following two methods:
- the liquid crystalline structure of the compositions has been proved by a polarizing microscope using a crossed polarizer and analyzer, gypsum I red plate;
- the degradation of structure after dilution has been followed by measuring the quantity of the released surfactant material. The degradation has also been followed by a comparative method, i.e. measuring the surface tension of the diluted composition according to the invention and that of a composition diluted to the same concentration but containing no grafting material, as a function of time.

It has been found that in each case the amount of the surfactant remaining on the surface of the solid material exceeds the rate of the adsorption by several orders of magnitude. This is proved by the difference between the measured surface tension values and by the change of the surface tension in time. We have found that the liquid crystalline layer adhered to the solid surface influences advantageously the aggregation and sedimentation stability of the solid material.

The following Examples illustrate the compositions according to the invention. % are by weight.

### Example 1

| | |
|---|---|
| Sodium dodecyl sulfate | 27% |
| Water | 53% |
| PVC K70 powder (47 mN/m; grain size d=20-50 µm) | 20% |
| (η = 2.03 Pa) | |

The above composition shows a liquid crystalline structure at 33.75% surfactant content, related to the liquid phase, proved by polarizing microscope. The known system containing sodium dodecyl sulfate shows a liquid crystalline structure at a sodium dodecyl sulfate concentration above 67%.

### Example 2

| | |
|---|---|
| Nonyl phenol polyglycol ether (10 EO) | 30% |
| Water | 60% |
| Anatase (85 mN/m; d= 12-20 µm) | 10% |
| (η = 1.18 Pa) | |

The above composition shows a lyotropic liquid crystalline structure at 33.33% of surfactant content (related to the liquid phase), proved by polarizing microscope. According to literature data nonyl phenol polyglycol ether (10 EO) forms a liquid crystalline structure in water at a concentration of 55% , according to our experiment at a concentration of 58%.

### Example 3

| | |
|---|---|
| Ethoxylated anhydrosorbitol monostearate | 32.5% |
| Lead (240 m/Nm; d = 10 - 75 µm) | 0.5% |
| Water | 67% |
| (η = 1.67 Pa) | |

The above composition shows a liquid crystalline structure at 32.7% of surfactant related to the medium, which is proved by microscope. The surfactant forms a liquid crystalline structure without grafting at a concentration above 40%.

### Example 4

| | |
|---|---|
| Sodium dodecyl sulfate | 51% |
| Water | 29% |
| Polytetrafluorethylene (PTFE) (Teflon ^{R}) (18 mN/m; d = 5-8 µm) | 20% |
| (η = 2.17 Pa.s) | |

The sodium dodecyl sulfate forms a liquid crystalline structure in water at a concentration > 67%, while the above composition shows the liquid crystalline structure at a concentration of 63.7%.

### Example 5

| | |
|---|---|
| Ethoxylated C₁₂-C₁₆ fatty alcohol (EO=4) | 20% |
| Water | 32% |
| n-Hexadecane | 8% |
| Quartz (120 mN/m; d = 1-5 µm) | 40% |
| (η = 2.70 Pa) | |

The system used as control contains 40% of above ethoxylated fatty alcohol, 50% of water and 10% of n-hexadecane. The above composition contains 33.3% of surfactant, 53.3% of water and 13.3% of n-hexadecane, related to the liquid phase. The liquid crystalline structure can be proved by microscope.

### Example 6

| | |
|---|---|
| Sodium dodecyl sulfate | 20% |
| N-dodecyl alcohol | 20% |
| n-Dodecane | 20% |
| Water | 20% |
| PVC K70 powder (47 mN/m; d = 20-56 µm) | 20% |
| (η = 1.13 Pa) | |

The system without grafting shows the liquid crystalline structure at the following composition: 40% of sodium dodecyl sulfate, 20% of n-dodecyl alcohol, 20% of n-dodecane, 20% of water. The above composition according to the invention contains only 20% of each mentioned component. The liquid crystalline structure is proved in both cases by microscope.

### Example 7

| | |
|---|---|
| Ethoxylated anhydrosorbitol monostearate | 5% |
| Sodium dodecyl sulfate | 5% |
| Ethanol | 40% |
| n-Hexanol | 5% |
| n-Dodecanol | 5% |
| Quartz (120 mN/m; d = 1-5 µm) | 40% |
| (η = 2.18 Pa) | |

The composition of the system without grafting and having a liquid crystalline structure is as follows: 20% of ethoxylated anhydrosorbitol monostearate, 13% of sodium dodecyl sulfate, 10% of n-hexanol, 10% of dodecanol and 47% of ethanol. The above composition (calculated for the liquid phase) contains 8.3% of each surfactant and co-surfactant and 66.7% of ethanol. Both structures are proved by microscope.

### Example 8

| | |
|---|---|
| Cetyl-trimethylammonium bromide | 35% |
| Water | 45% |
| Quartz (120 mN/m; d = 1-5 µm) | 20% |
| (η = 0.59 Pa) | |

The cetyl-trimethylammonium bromide forms a liquid crystalline structure, in water at a concentration of 56%, while the above composition forms the lyotropic system at a concentration of 43.7%, calculated for the liquid phase.

### Example 9

| | |
|---|---|
| Ethoxylated anhydrosorbitol tristearate | 10% |
| Isooctanol | 60% |
| Ethylene glycol | 10% |
| Anatase (85 mN/m, d = 12-20 µm) | 20% |
| (η = 1.76 Pa) | |

The ethoxylated anhydrosorbitol tristearate forms a liquid crystalline phase in a mixture of isooctanol and ethylene glycol only at the concentration of 40%. The above composition contains 12.5% of surfactant, calculated for the liquid phase.

### Example 10

| | |
|---|---|
| Ethoxylated anhydrosorbitol tristearate | 3% |
| Sodium dodecyl sulfate | 3% |
| Water | 20% |
| n-Dodecanol | 24% |
| Quartz (120 mN/m; d = 1-5 µm) | 50% |
| (η = 1.28 Pa) | |

The mixture of sodium dodecyl sulfate and ethoxylated anhydrosorbitol tristearate (1:1) forms a lyotropic liquid crystalline system with water in the presence of n-dodecanol without grafting with quartz only at a concentration of > 24%.

### Example 11

| | |
|---|---|
| Ethoxylated castor oil (EO=35) | 20% |
| Calcium dodecyl benzenesulfonate | 35% |
| n-Butanol | 25% |
| Paraffin oil (pharmacopeia) | 10% |
| PTFE (18 mN/m; d = 5-8 µm) | 10% |
| (η = 0.78 Pa) | |

The above composition has a liquid crystalline structure, which is proved by microscope. A composition without PTFE forms only a regular structure if the amount of the ethoxylated castor oil is increased by 10%.

### Example 12

| | |
|---|---|
| Ethoxylated anhydrosorbitol tristearate | 10% |
| Water | 10% |
| Cholesterol | 5% |
| n-Dodecane | 50% |
| Anatase (85 mN/m; d = 12-20 µm) | 15% |
| (η = 1.59 Pa) | |

The cholesterol is added to the system dissolved in the water. The composition is a lyotropic liquid crystal showing under the microscope a lamellar liquid crystalline structure.

### Example 13

| | |
|---|---|
| Ethylene oxide- propylene oxide block oligomer (corresponding to the type of Genapol PF 10) | 13% |
| Water | 65% |
| Coffein | 7% |
| Polyethylene (21 mN/m; d = 10-30 µm) | 15% |
| (η = 1.5 Pa.s) | |

The coffein is dissolved in the water and the other ingredients are admixed in this solution. The composition thus obtained shows under microscope a radially arranged lyotropic liquid cristalline structure.

### Example 14

| | |
|---|---|
| Ethoxylated anhydrosorbitol tristearate | 10% |
| Water | 20% |
| Cholesterol | 5% |
| n-Dodecane | 30% |
| Butyl acetate | 20% |
| Anatase (85 mN/m; d = 12-20 µm) | 15% |

The cholesterol is dissolved in the mixture of n-dodecane and butyl acetate and the solution thus obtained is added to the system. The composition obtained is a lyotropic liquid crystal showing under the microscope a lamellar lyotropic liquid crystalline structure.

### Example 15

| | |
|---|---|
| Sodium dodecyl sulfate | 25% |
| Water | 54% |
| Polyvinylpyrrolidone (M = 25,000; a = 0.85) | 1% |
| PVC K70 powder (47 mN/m; d = 20-56 µm) | 20% |

### Example 16 (counter Example)

| | |
|---|---|
| Sodium dodecyl sulfate | 25% |
| Water | 54% |
| Polyvinylpyrrolidone (M = 1 x 10⁶, a = 0.52) | 1% |
| PVC K70 powder (47 mN/m; d = 20-56 µm) | 20% |

Both compositions are lyotropic liquid crystals, but the composition of the counter Example does not show a liquid crystal layer bound to the solid particles after a dilution with water to a concentration of 5%. In case of the composition of Example 15, diluted to the same concentration, however, 65% of the surfactant remains bound 60 minutes after the dilution.

### Example 17

| | |
|---|---|
| Ethoxylated anhydrosorbitol monostearate | 5% |
| Water | 44.99% |
| Poly(L) glutamic acid (M = 10,000, a = 1.115) | 0.01% |
| Quartz (120 mN/m; d = 1-5 µm) | 50% |

The above composition is a lyotropic liquid crystal, the adhered layer contains the 28% of the starting tenside after 60 minutes.

### Example 18

| | |
|---|---|
| Nonyl phenol polyglycol ether (EO = 10) | 10% |
| Water | 40% |
| Polyethylene oxide (M = 1,000, a = 0.82) | 40% |
| PTFE (18 mN/m; d = 5-8 µm) | 10% |

### Example 19 (counter Example)

| | |
|---|---|
| Nonyl phenol polyglycol ether | 10% |
| Water | 40% |
| Polyethylene oxide (M = 1,000, a = 0.82) | 40% |
| PTFE (18 mN/m; d = 5-8 µm) | 10% |

In case of the composition of Example 18 the adhered layer contains the 72% of the surfactant components 60 minutes after a 20-fold dilution with water, while the composition according to the counter Example retains only less than 10% of the surfactant.

### Example 20

| | |
|---|---|
| Octadecyl trimethylammonium bromide | 16% |
| Water | 50% |
| Polyethylene oxide (M = 1,000, a = 0.82) | 25% |
| Polyvinylalcohol (M = 18,000, a = 0.77) | 5% |
| Isopropanol | 4.5% |
| Lead (240 mN/m; d = 10-76 µm) | 0.5% |

The composition is a liquid lyotropic crystal. In the diluted system (5 ml composition dispersed in 100 ml water) the amount of the bound surfactant material is 65% 60 minutes after the dilution.

### Example 21

| | |
|---|---|
| Ethoxylated C₁₂-C₁₆ fatty alcohol (EO=15) | 15% |
| Water | 67% |
| Polyacrylic acid sodium salt (M = 25,000, a=1.08) | 5% |
| Anatase (85 mN/m; d = 12-20 µm) | 13% |

The composition is a lyotropic liquid crystal. In the diluted system (5 g composition dispersed in 100 ml of water) the amount of the bound surfactant material is 90% 60 minutes after the preparation.

### Example 22

| | |
|---|---|
| Ethoxylated anhydrosorbitol monostearate | 9.5% |
| Water | 40% |
| Isopropanol | 20% |
| Ethylene glycol | 20% |
| Polyvinylalcohol (M = 78,000, a = 0.77) | 0.25% |
| Polyvinylpyrrolidone | 0.25% |
| PVC K70 powder (47 mN/m; d = 20-56 µm) | 10% |

The composition is a lyotropic liquid crystal which retains the 55% of the surfactant material 60 minutes after 3-fold dilution with water.

### Example 23

| | |
|---|---|
| Ethoxylated castor oil (EO = 35) | 15% |
| n-Hexanol | 40% |
| n-Dodecanol | 20% |
| n-Dodecane | 20% |
| Polyethylene imine (M = 12,000, a = 0.89) | 2% |
| Quartz (120 mN/m; d = 1-5 µm) | 3% |

The composition is a lyotropic liquid crystal. 60 minutes after a 20-fold dilution with water 30% of the surfactant material remains adhered to the solid surface.

### Example 24

| | |
|---|---|
| Sodium dodecyl sulfate | 51% |
| Water | 42% |
| Polyacrylic acid (M = 50,000, a = 0.91) | 0.25% |
| Oligodextrane (M = 2,000, a = 0.60) | 0.25% |
| PVC K70 powder (47 mN/m; d = 20-56 µm) | 6.5% |

The composition is a lyotropic liquid crystal. 60 minutes after a 20-fold dilution with water 25% of the surfactant remains bound.

### Example 25

| | |
|---|---|
| Ethoxylated anhydrosorbitol tristearate | 20% |
| Water | 40% |
| Polyacrylamide (M = 10,000, a = 0.84) | 10% |
| Quartz (120 mN/m; d = 1-5 µm) | 20% |

The composition is a lyotropic liquid crystal. 60 minutes after a 20-fold dilution 70% of the surfactant remains bound.

### Example 26

| | |
|---|---|
| Ethoxylated tallow amine (EO = 25, amine value : 0.75) | 10% |
| Water | 49.5% |
| Polyacrylamide (M = 5 x 10⁶, a = 0.80) | 0.5% |
| Quartz (120 mN/m; d = 1-5 µm) | 40% |

The composition is a lyotropic liquid crystal. 60 minutes after a 20-fold dilution with water 92% of the surfactant remains bound.

### Example 27

| | |
|---|---|
| Ethylene oxide - propylene oxide block oligomer (corresponding to the type of Genapol PF 10) | 10% |
| Water | 68% |
| Coffein | 5% |
| Oligodextrane (M = 2,000, a = 0.6) | 2% |
| Polyethylene (21 mN/m; d = 30 µm) | 15% |

The composition is a lyotropic liquid crystal. The lyotropic structure remains on the surface of the solid material after a 6-fold dilution with water. 60 minutes after the dilution 55% of the surfactant is in a bound state. When preparing the composition the aqueous solution of coffein was used as starting material.

### Example 28

| | |
|---|---|
| Ethoxylated anhydrosorbitol tristearate | 10% |
| Ethylene glycol | 20% |
| Dodecane | 50% |
| Cholesterol | 5% |
| Polyethylene oxide - propylene oxide (M = 10,000, a = 0.84) | 5% |
| Anatase (85 Mn/m; d = 12-30 µm) | 10% |

When preparing the composition the aqueous solution of cholesterol was used as starting material. Under microscope the composition shows a lamellar lyotropic structure. After dilution with water (1 : 25) the bound structure remains on the surface of the particles. 60 minutes after the dilution 40% of the surfactant is bound.

### Example 29

| | |
|---|---|
| Ethoxylated anhydrosorbitol tristearate | 10% |
| Ethylene glycol | 20% |
| Dodecane | 50% |
| Cholesterol | 5% |
| Polyethylene oxide - propylene oxide (M = 10,000, a = 0.84) | 5% |
| Anatase (85 mN/m; d = 12-30 µm) | 10% |

When preparing the composition the ethylene glycol solution of cholesterol was used as starting material. Under microscope the composition shows a lamellar lyotropic structure. After dilution with water (1 : 25) the bound structure remains on the surface of the particles. 60 minutes after the dilution 40% of the surfactant is bound.

The grafting step used in preparing the compositions of the invention is effected by simple mixing of the solid material(s) with the surfactant and other components of the composition. It is believed that the solid material(s) act essentially as seed crystals, and initiates and promotes the formation of the liquid crystalline structure.

## Claims

1. A graft lyotropic liquid crystalline composition having a viscosity less than 10 Pa **comprising** 0.5 to 50% by weight of a solid material or a mixture thereof having a surface free energy of 18 to 240 mN/m and a grain size of <100 µm, 5 to 55% by weight of a surfactant or a mixture thereof having at least 8 carbon atoms, optionally 0.01 to 40% by weight of a polymer the value of a of which - characteristic of the tangly structure and of penetrability by the medium - is at least 0.6, 0 to 67% by weight of water or aqueous solution of non-surfactant materials, 0 to 40% by weight of a water immiscible, miscible or partly miscible solvents or a mixture thereof or the water immiscible or partly miscible organic solvent solution of non-surface active materials, 0 to 60% by weight of a co-surfactant or a mixture thereof and optionally other additives, and in that the total amount of water, water immiscible, miscible or partly miscible solvents and co-surfactant materials used as auxiliary materials is 15 to 94.5% by weight.

2. A composition as claimed in Claim 1, **comprising** a water soluble polymer in an amount of 1 to 40% by weight.

3. A composition as claimed in Claim 1, **comprising** a mixture of non-ionic polymers the total amount of which is 0.5 to 30% by weight.

4. A composition as claimed in Claim 1, **comprising** a totally dissociated ionic polymer in an amount of 0.01 - 5% by weight.

5. A composition as claimed in Claim 1, **comprising** a partly dissociated water soluble polymer or a mixture thereof in an amount of 0.5 to 20% by weight.

6. A composition as claimed in Claim 1, **comprising** a mixture of non-ionic polymers in an amount of 0.5 - 20% by weight.

7. A composition as claimed in Claim 1, **comprising** a non-ionic surfactant or a mixture thereof in an amount of 5 to 35% by weight as the surfactant.

8. A composition as claimed in Claim 1, **comprising** an ionic surfactant material or a mixture thereof in an amount of 20 to 51% by weight as the surfactant.

9. A composition as claimed in Claim 1, **comprising** a mixture of ionic and non-ionic surfactants in an amount of 6 to 55% by weight as the surfactant.

10. A composition as claimed in Claim 1, **comprising** a mixture of amphoteric and ionic and/or non-ionic surfactants in an amount of 6 to 55% by weight as the surfactant.

11. A process for the preparation of a composition as claimed in Claim 1, **comprising** grafting solid material with a the solution or suspension containing the other ingredients.

12. A process as claimed in Claim 11, **wherein** the solid material is prepared in situ in the system.

13. A process as claimed in Claim 11, **wherein** the dissolution of the auxiliary material(s) and the grafting with the solid material is carried out simultaneously.

## Patentansprüche

1. Gepfropfte lyotrope Flüssigkristallzusammensetzung mit einer Viskosität von weniger als 10 Pa.s, die enthält:
0,5 bis 50 Masse-% eines festen Materials oder eines Gemischs von festen Materialien, deren freie Oberflächenenergie 18 bis 240 mN/m beträgt und deren Korngröße kleiner als 100 µm ist,
5 bis 55 Masse-% eines Tensids oder eines Gemischs von Tensiden, wobei das Tensid mindestens 8 Kohlenstoffatome besitzt,
wahlweise 0,01 bis 40 Masse-% eines Polymers, dessen a-Wert, der eine Kenngröße für die verknäuelte Struktur und die Penetrierbarkeit durch das Medium darstellt, mindestens 0,6 beträgt,
0 bis 67 Masse-% Wasser oder einer wässerigen Lösung von nicht-tensidischen Substanzen,
0 bis 40 Masse-% eines nicht, teilweise oder vollständig mit Wasser mischbaren Lösungsmittels oder eines Gemischs dieser Lösungsmittel oder eine Lösung von nicht-tensidischen Substanzen in einem nicht oder teilweise mit Wasser mischbaren organischen Lösungsmittel,
0 bis 60 Masse-% eines Cotensids oder eines Gemischs von Cotensiden und wahlweise weiterer Zusätze, wobei die Gesamtmenge an Wasser, an mit Wasser nicht, teilweise oder vollständig mischbaren Lösungsmitteln und an Cotensiden, die als Hilfsstoffe verwendet werden, 15 bis 94,5 Masse-% beträgt.

2. Zusammensetzung nach Anspruch 1, die ein wasserlösliches Polymer in einer Menge von 1 bis 40 Masse-% enthält.

3. Zusammensetzung nach Anspruch 1, die ein Gemisch von nichtionischen Polymeren in einer Gesamtmenge von 0,5 bis 30 Masse-% enthält.

4. Zusammensetzung nach Anspruch 1, die ein vollständig dissoziiertes ionisches Polymer in einer Menge von 0,01 bis 5 Masse-% enthält.

5. Zusammensetzung nach Anspruch 1, die ein teilweise dissoziiertes wasserlösliches Polymer oder ein Gemisch von solchen Polymeren in einer Menge von 0,5 bis 20 Masse-% enthält.

6. Zusammensetzung nach Anspruch 1, die ein Gemisch von nichtionischen Polymeren in einer Menge von 0,5 bis 20 Masse-% enthält.

7. Zusammensetzung nach Anspruch 1, die als Tensid ein nichtionisches Tensid oder ein Gemisch von nichtionischen Tensiden in einer Menge von 5 bis 35 Masse-% enthält.

8. Zusammensetzung nach Anspruch 1, die als Tensid ein ionisches grenzflächenaktives Mittel oder ein Gemisch solcher Mittel in einer Menge von 20 bis 51 Masse-% enthält.

9. Zusammensetzung nach Anspruch 1, die als Tensid ein Gemisch von ionischen und nichtionischen Tensiden in einer Menge von 6 bis 55 Masse-% enthält.

10. Zusammensetzung nach Anspruch 1, die ein Gemisch von amphoteren und ionischen und/oder nichtionischen Tensiden in einer Menge von 6 bis 55 Masse-% enthält.

11. Verfahren zur Herstellung einer Zusammensetzung nach Anspruch 1, bei dem das feste Material mit einer Lösung oder Suspension gepfropft wird, welche die übrigen Bestandteile enthält.

12. Verfahren nach Anspruch 11, wobei das feste Material in situ im System hergestellt wird.

13. Verfahren nach Anspruch 11, bei dem die Auflösung des Hilfsstoffs oder der Hilfsstoffe und die Propfung mit dem festen Material gleichzeitig durchgeführt werden.

## Revendications

1. Composition cristalline liquide lyotrope greffée possédant une viscosité de moins de 10 Pa qui comprend 0,5 à 50 % en poids d'un matériau solide ou d'un de leurs mélanges ayant une énergie superficielle libre de 18 à 240 mN/m et une grosseur de grain < 100 µm, 5 à 55 % en poids d'un agent tensio-actif ou d'un de leurs mélanges ayant au moins 8 atomes de carbone, éventuellement 0,01 à 40 % en poids d'un polymère dont la valeur de a - caractéristique de la structure enchevêtrée et de la pénétrabilité par le milieu-vaut au moins 0,6, 0 à 67 % en poids d'eau ou d'une solution aqueuse de matériaux non tensio-actifs, 0 à 40 % en poids d'un solvant non miscible, miscible ou partiellement miscible à l'eau ou d'un de leurs mélanges ou de la solution dans un solvant organique non miscible ou partiellement miscible à l'eau de matériaux non tensio-actifs, 0 à 60 % en poids d'un agent co-tensioactif ou d'un de leurs mélanges et éventuellement d'autres additifs, et où la quantité totale de l'eau, des solvants non miscibles, miscibles ou partiellement miscibles à l'eau et des matériaux co-tensio-actifs utilisés à titre de matériaux auxiliaires est de 15 à 94,5 % en poids.

2. Composition selon la revendication 1, qui comprend un polymère soluble dans l'eau en une quantité de 1 à 40 % en poids.

3. Composition selon la revendication 1, qui comprend un mélange de polymères non ioniques dont la quantité totale est de 0,5 à 30 % en poids.

4. Composition selon la revendication 1, qui comprend un polymère ionique totalement dissocié en une quantité de 0,01 - 5 % en poids.

5. Composition selon la revendication 1, qui comprend un polymère soluble dans l'eau partiellement dissocié ou un de leurs mélanges en une quantité de 0,5 à 20 % en poids.

6. Composition selon la revendication 1, qui comprend un mélange de polymères non ioniques en une quantité de 0,5 - 20 % en poids.

7. Composition selon la revendication 1, qui comprend un agent tensio-actif non ionique ou un de leurs mélanges en une quantité de 5 à 35 % en poids exprimée en l'agent tensio-actif.

8. Composition selon la revendication 1, qui comprend un matériau tensio-actif ionique ou un de leurs mélanges en une quantité de 20 à 51 % en poids exprimée en l'agent tensio-actif.

9. Composition selon la revendication 1, qui comprend un mélange d'agents tensio-actifs ioniques et non ioniques en une quantité de 6 à 55 % en poids exprimée en l'agent tensio-actif.

10. Composition selon la revendication 1, qui comprend un mélange d'agents tensio-actifs amphotères et ioniques et/ou non ioniques en une quantité de 6 à 55 % en poids exprimée en l'agent tensioactif.

11. Procédé de préparation d'une composition selon la revendication 1, qui comprend le greffage du matériau solide avec une solution ou une suspension contenant les autres ingrédients.

12. Procédé selon la revendication 11, dans lequel on prépare le matériau solide in situ dans le système.

13. Procédé selon la revendication 11, dans lequel on effectue simultanément la dissolution du ou des matériau(x) auxiliaire(s) et le greffage avec le matériau solide.
